# EUROPÄISCHE PATENTANMELDUNG

(11) **EP 4 068 484 A1**
(43) Veröffentlichungstag der Anmeldung: **05.10.2022**
(21) Anmeldenummer: 21166090.7
(22) Anmeldetag: 30.03.2021
(51) Int. Cl.: H01M 50/247, B25F 5/02

(54) **AKKUGERÄT UND SYSTEM**

(71) Anmelder: Andreas Stihl AG & Co. KG, 71336 Waiblingen (DE)
(72) Erfinder: PICKHARDT,Moritz, 70374 Stuttgart (DE); WAGNER, Daniel, 73650 Winterbach (DE)
(74) Vertreter: Patentanwälte Ruff, Wilhelm, Beier, Dauster & Partner mbB

(57) **Zusammenfassung**

Die Erfindung bezieht sich auf ein Akkugerät (1), wobei das Akkugerät (1) aufweist:
- einen Akkuschacht (2), wobei der Akkuschacht (2) zur auswechselbaren Aufnahme eines Akkupacks (50) ausgebildet ist,
- mindestens einen erstartigen Führungssteg (3), wobei mindestens der erstartige Führungssteg (3) zur Berührung des Akkupacks (50) in mindestens einer Führungsnut (51) des Akkupacks (50) auf mindestens einer Umfangsseite (50USya, 50USyb) des Akkupacks (50) zur geführten Positionierung des Akkupacks (50) in einer ersten Richtung (x) in dem Akkuschacht (2) ausgebildet ist, und
- mindestens einen von dem erstartigen Führungssteg (3) verschiedenartigen zweitartigen Führungssteg (4), wobei mindestens der zweitartige Führungssteg (4) zur Berührung des Akkupacks (50) an mindestens einer Umfangsfläche (50UFya, 50UFyb) des Akkupacks (50) auf mindestens derselben Umfangsseite (50USya, 50USyb) des Akkupacks (50) zur geführten Positionierung des Akkupacks (50) in einer von der ersten Richtung (x) verschiedenen zweiten Richtung (y) in dem Akkuschacht (2) ausgebildet ist.

## Beschreibung

Die Erfindung bezieht sich auf ein Akkugerät und ein System aufweisend ein, insbesondere solches, Akkugerät und/oder einen Akkupack.

### AUFGABE UND LÖSUNG

Der Erfindung liegt als Aufgabe die Bereitstellung eines Akkugeräts und eines Systems aufweisend ein, insbesondere solches, Akkugerät und/oder einen Akkupack zugrunde, das jeweils verbesserte Eigenschaften aufweist bzw. hat.

Die Erfindung löst die Aufgabe durch die Bereitstellung eines Akkugeräts mit den Merkmalen des Anspruchs 1, eines Systems mit den Merkmalen des Anspruchs 14 und eines Systems mit den Merkmalen des Anspruchs 15. Vorteilhafte Weiterbildungen und/oder Ausgestaltungen der Erfindung sind in den abhängigen Ansprüchen beschrieben.

Das erfindungsgemäße, insbesondere elektrische, Akkugerät umfasst bzw. weist, insbesondere mindestens, einen Akkuschacht, mindestens einen erstartigen Führungssteg und mindestens einen von dem erstartigen Führungssteg verschiedenartigen zweitartigen Führungssteg auf. Der Akkuschacht ist zur auswechselbaren, insbesondere vollständigen, Aufnahme eines Akkupacks ausgebildet bzw. konfiguriert. Mindestens der erstartige Führungssteg ist zur, insbesondere unmittelbaren, Berührung des Akkupacks in mindestens einer Führungsnut des Akkupacks auf mindestens einer Umfangsseite des Akkupacks zur geführten Positionierung, insbesondere Fixierung und/oder Zentrierung, des Akkupacks in, insbesondere nur, einer, insbesondere einzigen, ersten Richtung in dem Akkuschacht ausgebildet bzw. konfiguriert. Mindestens der zweitartige Führungssteg ist zur, insbesondere unmittelbaren, Berührung des Akkupacks an mindestens einer Umfangsfläche, insbesondere der Umfangsfläche, des Akkupacks auf mindestens derselben Umfangsseite des Akkupacks zur geführten Positionierung, insbesondere Fixierung und/oder Zentrierung, des Akkupacks in, insbesondere nur, einer, insbesondere einzigen, von der ersten Richtung verschiedenen zweiten Richtung in dem Akkuschacht ausgebildet bzw. konfiguriert.

Dies, insbesondere die Aufteilung der verschiedenen Funktionen der geführten Positionierung des Akkupacks in der ersten Richtung und der geführten Positionierung des Akkupacks in der zweiten Richtung auf mindestens den erstartigen Führungssteg und mindestens den zweitartigen Führungssteg, ermöglicht eine Vermeidung einer mechanischen Überbestimmung. Zusätzlich oder alternativ, insbesondere somit, ermöglicht dies eine einfache Herstellung eines Werkzeugs zur Herstellung des Akkugeräts, insbesondere des Akkuschachts, mindestens des erstartigen Führungsstegs und/oder mindestens des zweitartigen Führungsstegs.

Insbesondere braucht oder kann mindestens der erstartige Führungssteg nicht zur geführten Positionierung des Akkupacks in der zweiten Richtung ausgebildet sein. Zusätzlich oder alternativ braucht oder kann mindestens der zweitartige Führungssteg nicht zur geführten Positionierung des Akkupacks in der ersten Richtung ausgebildet sein. Weiter zusätzlich oder alternativ braucht oder kann mindestens der zweitartige Führungssteg nicht zur Berührung des Akkupacks in mindestens einer, insbesondere weiteren, der Führungsnuten des Akkupacks, insbesondere nicht zur Erstreckung in mindestens eine der Führungsnuten, ausgebildet sein. Weiter zusätzlich oder alternativ braucht oder kann mindestens der erstartige Führungssteg nicht zur Berührung des Akkupacks an mindestens einer, insbesondere der, Umfangsfläche des Akkupacks ausgebildet sein.

Die Umfangsfläche kann eben sein.

Die Umfangsfläche und die Führungsnut können aneinander angrenzen.

Der Begriff "Vertiefung" oder der Begriff "Schlitz" kann synonym für den Begriff "Nut" verwendet werden. Zusätzlich oder alternativ kann die Führungsnut einen Querschnitt mit einer Halboval-Form aufweisen bzw. haben.

Mindestens der erstartige Führungssteg und/oder mindestens der zweitartige Führungssteg können/kann, insbesondere jeweils, einen Querschnitt mit einer Rechteck-Form aufweisen bzw. haben. Zusätzlich oder alternativ können mindestens der erstartige Führungssteg und mindestens der zweitartige Führungssteg in einer durch die erste Richtung und die zweite Richtung definierten bzw. aufgespannten Ebene, insbesondere angeordnet, sein. Weiter zusätzlich oder alternativ können mindestens der erstartige Führungssteg und mindestens der zweitartige Führungssteg im Wesentlichen bzw. etwa, insbesondere genau, parallel zueinander verlaufen. Insbesondere kann im Wesentlichen parallel eine Abweichung von maximal 5 ° (Grad), insbesondere maximal 2 °, insbesondere maximal 1 °, voneinander bedeuten. Weiter zusätzlich oder alternativ kann der Begriff "Rippe" synonym für den Begriff "Steg" verwendet werden.

Mindestens der erstartige Führungssteg und/oder mindestens der zweitartige Führungssteg können/kann, insbesondere jeweils, auf mindestens einer, insbesondere selben und/oder inneren, Umfangsseite des Akkuschachts, insbesondere angeordnet, sein. Zusätzlich oder alternativ können/kann mindestens der erstartige Führungssteg und/oder mindestens der zweitartige Führungssteg, insbesondere jeweils, in Bezug auf den Akkuschacht, insbesondere an dem Akkuschacht, insbesondere einer Seitenwandung des Akkuschachts, angeordnet, insbesondere befestigt, sein.

Der Akkuschacht kann zur werkzeugfreien und/oder zerstörungsfreien Aufnahme des Akkupacks ausgebildet sein. Zusätzlich oder alternativ kann der Begriff "entnehmbar" oder der Begriff "austauschbar" synonym für den Begriff "auswechselbar" verwendet werden. Weiter zusätzlich oder alternativ kann der Akkuschacht über den, insbesondere aufgenommenen, Akkupack sich, insbesondere hinaus, erstrecken bzw. vorstehen, insbesondere nach oben. Dies kann einen Schutz des Akkupacks, insbesondere durch den Akkuschacht, ermöglichen. Weiter zusätzlich oder alternativ kann der Akkuschacht zur Aufnahme des Akkupacks, insbesondere nach oben, offen sein. Weiter zusätzlich oder alternativ kann der Akkuschacht an seiner Umfangsseite bzw. umfangsseitig und/oder unten geschlossen sein.

Die Führungsnut kann zur Einführung des erstartigen Führungsstegs, insbesondere nach unten, offen sein. Zusätzlich oder alternativ kann die Umfangsseite des Akkupacks eine äußere Umfangsseite und/oder eines Gehäuses, insbesondere eines Außengehäuses, des Akkupacks sein.

In einer Weiterbildung der Erfindung steht mindestens der erstartige Führungssteg entlang der zweiten Richtung, insbesondere von der Seitenwandung des Akkuschachts, zu dem Akkupack weiter vor als mindestens der zweitartige Führungssteg, insbesondere auf mindestens derselben Umfangsseite. Zusätzlich oder alternativ ist mindestens der erstartige Führungssteg entlang der zweiten Richtung länger als mindestens der zweitartige Führungssteg. Dies ermöglicht die verschiedenen Funktionen bzw. die geführte Positionierung des Akkupacks in der ersten Richtung durch mindestens den erstartigen Führungssteg und die geführte Positionierung des Akkupacks in der zweiten Richtung durch mindestens den zweitartigen Führungssteg.

In einer Weiterbildung der Erfindung umfasst bzw. weist das Akkugerät mindestens einen von dem erstartigen Führungssteg und/oder dem zweitartigen Führungssteg verschiedenartigen drittartigen Führungssteg auf. Mindestens der drittartige Führungssteg ist zur Erstreckung in mindestens eine, insbesondere weitere, der Führungsnuten des Akkupacks auf mindestens derselben Umfangsseite des Akkupacks, insbesondere zur Absicherung des Akkupacks in der ersten Richtung und/oder der zweiten Richtung in dem Akkuschacht, ausgebildet bzw. konfiguriert. Insbesondere ist mindestens der drittartige Führungssteg entlang der ersten Richtung schmaler als mindestens der erstartige Führungssteg. Zusätzlich oder alternativ ist mindestens der drittartige Führungssteg entlang der zweiten Richtung länger als mindestens der erstartige Führungssteg. Weiter zusätzlich oder alternativ steht mindestens der drittartige Führungssteg entlang der zweiten Richtung, insbesondere von der Seitenwandung des Akkuschachts, zu dem Akkupack weiter vor als mindestens der erstartige Führungssteg, insbesondere auf mindestens derselben Umfangsseite. Dies ermöglicht insbesondere nur, bei einer hohen mechanischen Last eine Berührung des Akkupacks in mindestens der Führungsnut durch mindestens den drittartigen Führungssteg und/oder bei einer niedrigen oder keiner mechanischen Last eine Vermeidung einer Berührung des Akkupacks in mindestens der Führungsnut durch mindestens den drittartigen Führungssteg. Zusätzlich oder alternativ, insbesondere somit, ermöglicht dies eine Vermeidung eines Klemmens, insbesondere eines Festklemmens, des Akkupacks, insbesondere in dem Akkuschacht, durch mindestens den drittartigen Führungssteg, insbesondere bei einer niedrigen oder keiner mechanischen Last. Insbesondere braucht oder kann mindestens der drittartige Führungssteg nicht zur Berührung des Akkupacks bei einer niedrigen oder keiner mechanischen Last ausgebildet sein. Zusätzlich oder alternativ braucht oder kann mindestens der drittartige Führungssteg nicht zur Berührung des Akkupacks an mindestens einer, insbesondere der, Umfangsfläche des Akkupacks ausgebildet sein. Weiter zusätzlich oder alternativ kann mindestens der drittartige Führungssteg einen Querschnitt mit einer Rechteck-Form aufweisen bzw. haben. Weiter zusätzlich oder alternativ kann mindestens der drittartige Führungssteg in der durch die erste Richtung und die zweite Richtung definierten Ebene, insbesondere angeordnet, sein. Weiter zusätzlich oder alternativ können mindestens der erstartige Führungssteg und/oder mindestens der zweitartige Führungssteg und mindestens der drittartige Führungssteg im Wesentlichen, insbesondere genau, parallel zueinander verlaufen. Weiter zusätzlich oder alternativ kann mindestens der drittartige Führungssteg auf mindestens der, insbesondere derselben und/oder inneren, Umfangsseite des Akkuschachts, insbesondere angeordnet, sein. Weiter zusätzlich oder alternativ kann mindestens der drittartige Führungssteg in Bezug auf den Akkuschacht, insbesondere an dem Akkuschacht, insbesondere der Seitenwandung des Akkuschachts, angeordnet, insbesondere befestigt, sein.

In einer Weiterbildung, insbesondere einer Ausgestaltung, der Erfindung weist das Akkugerät, insbesondere pro Akkuschacht und/oder genau, zwei erstartige Führungsstege auf. Die erstartigen Führungsstege sind zur Berührung des Akkupacks in zwei Führungsnuten des Akkupacks auf gegenüberliegenden Umfangsseiten des Akkupacks ausgebildet. Zusätzlich oder alternativ weist das Akkugerät, insbesondere pro Akkuschacht, mindestens zwei, insbesondere genau vier, zweitartige Führungsstege auf. Die zweitartigen Führungsstege sind zur Berührung des Akkupacks an zwei Umfangsflächen des Akkupacks auf gegenüberliegenden Umfangsseiten des Akkupacks ausgebildet und/oder an mindestens der Umfangsfläche entlang der ersten Richtung versetzt, insbesondere angeordnet. Weiter zusätzlich oder alternativ weist das Akkugerät, insbesondere pro Akkuschacht und/oder genau, zwei drittartige Führungsstege auf. Die drittartigen Führungsstege sind zur Erstreckung in zwei Führungsnuten des Akkupacks auf gegenüberliegenden Umfangsseiten des Akkupacks ausgebildet. Dies ermöglicht eine gute Positionierung und/oder eine gute Absicherung des Akkupacks, insbesondere in dem Akkuschacht.

In einer Ausgestaltung der Erfindung liegen die erstartigen Führungsstege und/oder die zweitartigen Führungsstege und/oder die drittartigen Führungsstege sich, insbesondere jeweils, entlang der zweiten Richtung im Wesentlichen bzw. etwa, insbesondere genau, gegenüber. Dies ermöglicht eine besonders gute Positionierung und/oder eine besonders gute Absicherung des Akkupacks, insbesondere in dem Akkuschacht. Insbesondere kann im Wesentlichen gegenüber entlang der zweiten Richtung mindestens teilweise gegenüber und/oder mindestens von der zweiten Richtung und/oder entlang der ersten Richtung zu derselben Art weniger versetzt als zu der verschiedenen Art bedeuten.

In einer Weiterbildung, insbesondere einer Ausgestaltung, der Erfindung sind mindestens der erstartige Führungssteg und mindestens der zweitartige Führungssteg, insbesondere und mindestens der drittartige Führungssteg, soweit vorhanden, entlang der ersten Richtung versetzt, insbesondere auf mindestens derselben Umfangsseite und/oder angeordnet. Insbesondere sind zweitartige Führungsstege und mindestens der erstartige Führungssteg und/oder mindestens der drittartige Führungssteg entlang der ersten Richtung dazwischen, insbesondere angeordnet. Dies ermöglicht die Anordnung mindestens des erstartigen Führungsstegs und mindestens des zweitartigen Führungsstegs, insbesondere und mindestens des drittartigen Führungsstegs, in der durch die erste Richtung und die zweite Richtung definierten Ebene und/oder, insbesondere somit, eine gute Positionierung und/oder eine gute Absicherung des Akkupacks, insbesondere in dem Akkuschacht.

In einer Weiterbildung, insbesondere einer Ausgestaltung, der Erfindung ist der Akkuschacht zur Aufnahme des Akkupacks entlang einer dritten Richtung ausgebildet. Insbesondere sind mindestens der erstartige Führungssteg und mindestens der zweitartige Führungssteg, insbesondere und mindestens der drittartige Führungssteg, soweit vorhanden, in einer, insbesondere der, zu der dritten Richtung orthogonalen Ebene, insbesondere angeordnet. Zusätzlich oder alternativ verlaufen/verläuft mindestens der erstartige Führungssteg und/oder mindestens der zweitartige Führungssteg und/oder mindestens der drittartige Führungssteg, soweit vorhanden, insbesondere jeweils, im Wesentlichen bzw. etwa, insbesondere genau, parallel zu der dritten Richtung. Weiter zusätzlich oder alternativ ist die erste Richtung im Wesentlichen bzw. etwa, insbesondere genau, orthogonal zu der dritten Richtung und/oder im Wesentlichen bzw. etwa, insbesondere genau, parallel zu der Umfangsseite, insbesondere der Umfangsfläche. Weiter zusätzlich oder alternativ ist die zweite Richtung im Wesentlichen bzw. etwa, insbesondere genau, orthogonal zu der ersten Richtung und/oder im Wesentlichen bzw. etwa, insbesondere genau, orthogonal zu der dritten Richtung und/oder im Wesentlichen bzw. etwa, insbesondere genau, orthogonal zu der Umfangsseite, insbesondere der Umfangsfläche. Insbesondere kann im Wesentlichen orthogonal eine Abweichung von minimal 85 °, insbesondere minimal 88 °, insbesondere minimal 89 °, voneinander bedeuten. Zusätzlich oder alternativ kann die dritte Richtung im Wesentlichen, insbesondere genau, parallel zu der Umfangsseite, insbesondere der Umfangsfläche, sein.

In einer Weiterbildung, insbesondere einer Ausgestaltung, der Erfindung sind mindestens der erstartige Führungssteg und mindestens der zweitartige Führungssteg, insbesondere und mindestens der drittartige Führungssteg, soweit vorhanden, mindestens, insbesondere nur, im Bereich eines, insbesondere geschlossenen und/oder inneren und/oder unteren, Aufnahmeendes, insbesondere an dem Aufnahmeende, des Akkuschachts, insbesondere angeordnet. Insbesondere umfasst bzw. weist das Akkugerät mindestens einen elektrischen Gerätekontakt, insbesondere Gerätesteckverbinder, zur, insbesondere unmittelbaren, elektrischen Kontaktierung von mindestens einem elektrischen Packkontakt, insbesondere Packsteckverbinder, des Akkupacks auf. Mindestens der Gerätekontakt ist im Bereich des Aufnahmeendes, insbesondere an dem Aufnahmeende, insbesondere auf einer Stirnseite des Akkuschachts, insbesondere angeordnet. Dies ermöglicht eine Positionierung und/oder eine Absicherung des Akkupacks an einer besonders relevanten Stelle, insbesondere in dem Akkuschacht. Insbesondere braucht oder kann das Akkugerät nicht einen weiteren verschiedenartigen Führungssteg auf mindestens der Umfangsseite des Akkupacks zur geführten Positionierung oder zur Absicherung des Akkupacks in dem Akkuschacht im Bereich des Aufnahmeendes aufweisen. Zusätzlich oder alternativ kann im Bereich dem Aufnahmeende näher als einem anderen, insbesondere gegenüberliegenden und/oder offenen und/oder äußeren und/oder oberen, Aufnahmeende, insbesondere Einführungs- bzw. Einsteckende, des Akkuschachts bedeuten. Weiter zusätzlich oder alternativ kann das, insbesondere innere und/oder untere, Aufnahmeende als Bodenende bezeichnet werden. Weiter zusätzlich oder alternativ kann der Begriff "Bodenseite" synonym für den Begriff "Stirnseite" verwendet werden. Weiter zusätzlich oder alternativ kann mindestens der Gerätekontakt zur, insbesondere werkzeugfreien und/oder zerstörungsfreien, lösbaren Kontaktierung von mindestens dem Packkontakt ausgebildet sein.

In einer Weiterbildung der Erfindung umfasst bzw. weist das Akkugerät mindestens einen, insbesondere den, elektrischen Gerätekontakt, insbesondere Gerätesteckverbinder, zur elektrischen Kontaktierung von mindestens einem, insbesondere dem, elektrischen Packkontakt, insbesondere Packsteckverbinder, des Akkupacks auf. Mindestens der erstartige Führungssteg und mindestens der zweitartige Führungssteg sind zu der Positionierung bei der Kontaktierung ausgebildet bzw. konfiguriert. Dies ermöglicht eine Positionierung des Akkupacks bei einem besonders relevanten Schritt der Aufnahme, insbesondere in dem Akkuschacht. Insbesondere braucht oder kann das Akkugerät nicht einen weiteren verschiedenartigen Führungssteg auf mindestens der Umfangsseite des Akkupacks zur Positionierung des Akkupacks in dem Akkuschacht bei der Kontaktierung aufweisen. Weiter zusätzlich oder alternativ kann mindestens der Gerätekontakt zur, insbesondere werkzeugfreien und/oder zerstörungsfreien, lösbaren Kontaktierung von mindestens dem Packkontakt ausgebildet sein.

In einer Weiterbildung, insbesondere einer Ausgestaltung, der Erfindung sind mindestens der erstartige Führungssteg und mindestens der zweitartige Führungssteg, insbesondere und mindestens der drittartige Führungssteg, miteinander einstückig bzw. -teilig ausgebildet, insbesondere in einem Bauteil. An dem Bauteil ist mindestens der Gerätekontakt, soweit vorhanden, angeordnet, insbesondere befestigt. Dies ermöglicht eine genaue Anordnung mindestens des erstartigen Führungsstegs und mindestens des zweitartigen Führungsstegs, insbesondere und mindestens des drittartigen Führungsstegs und/oder mindestens des Gerätekontakts, zueinander. Insbesondere kann der Akkuschacht, insbesondere die Seitenwandung, mindestens teilweise mit mindestens dem erstartigen Führungssteg und mindestens dem zweitartigen Führungssteg, insbesondere und mindestens dem drittartigen Führungssteg, einstückig ausgebildet sein, insbesondere in dem Bauteil. Zusätzlich oder alternativ kann das Bauteil ein Guss-Bauteil, insbesondere ein Spritzguss-Bauteil, sein. Weiter zusätzlich oder alternativ kann das Bauteil als Boden -und/oder Kontaktplatte bezeichnet werden.

In einer Weiterbildung, insbesondere einer Ausgestaltung, der Erfindung sind/ist mindestens der erstartige Führungssteg und/oder mindestens der drittartige Führungssteg, soweit vorhanden, zur Vermeidung, insbesondere Verhinderung, einer fehlausgerichteten Aufnahme des Akkupacks in dem Akkuschacht ausgebildet bzw. konfiguriert, insbesondere asymmetrisch angeordnet. Dies ermöglicht eine Vermeidung, insbesondere eine Verhinderung, einer Falschkontaktierung.

In einer Weiterbildung der Erfindung ist der Akkuschacht im Wesentlichen bzw. etwa, insbesondere genau, Parallelepiped-förmig, insbesondere Quader-förmig. Zusätzlich oder alternativ hat bzw. weist der Akkuschacht eine Breite, insbesondere in der ersten Richtung, von minimal 5 cm (Zentimeter) und/oder maximal 20 cm, eine Länge, insbesondere in der zweiten Richtung, von minimal 2,5 cm und/oder maximal 10 cm und/oder eine Höhe, insbesondere in einer, insbesondere der, dritten Richtung, von minimal 7,5 cm und/oder maximal 30 cm auf. Weiter zusätzlich oder alternativ ist das Akkugerät für eine maximale elektrische Leistung von minimal 1 kW (Kilowatt), insbesondere minimal 2 kW, und/oder maximal 10 kW, insbesondere maximal 5 kW, und/oder eine, insbesondere elektrische, Nennspannung von minimal 10 V (Volt), insbesondere minimal 20 V, und/oder maximal 100 V, insbesondere maximal 50 V, ausgebildet bzw. konfiguriert. Insbesondere kann im Wesentlichen Parallelepiped-förmig, insbesondere Quader-förmig, eine Abweichung von maximal 5 °, insbesondere maximal 2 °, insbesondere maximal 1 °, bedeuten. Zusätzlich oder alternativ kann im Wesentlichen Parallelepiped-förmig, insbesondere Quader-förmig, abgerundete Kanten und/oder abgerundete Ecken bedeuten. Zusätzlich oder alternativ kann der Begriff "Tiefe" synonym für den Begriff "Länge" verwendet werden.

In einer Weiterbildung der Erfindung ist das Akkugerät, insbesondere entweder, ein, insbesondere handgeführtes, insbesondere handgetragenes, Bearbeitungsgerät zum elektrischen Antrieb, insbesondere mit elektrischer Antriebsleistung, mittels des Akkupacks oder ein Ladegerät zur elektrischen Aufladung, insbesondere mit elektrischer Aufladeleistung, des Akkupacks. Dies ermöglicht die hohe mechanische Last. Insbesondere handgeführtes, insbesondere handgetragenes, Bearbeitungsgerät kann bedeuten, dass das Bearbeitungsgerät eine Masse von maximal 50 kg (Kilogramm), insbesondere maximal 20 kg, insbesondere maximal 10 kg, aufweisen bzw. haben kann. Zusätzlich oder alternativ kann das Bearbeitungsgerät ein Garten-, Forst-, Bau- und/oder Bodenbearbeitungsgerät, insbesondere eine Säge, insbesondere eine Kettensäge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere oder ein Hochdruckreiniger, sein. Weiter zusätzlich oder alternativ kann das Ladegerät ein Multi- bzw. Mehrfach-Ladegerät sein. Weiter zusätzlich oder alternativ kann der Akkuschacht ein Lagerungsschacht zur Lagerung des Akkupacks sein.

Das erfindungsgemäße System umfasst bzw. weist ein, insbesondere das, Akkugerät wie vorhergehend genannt bzw. beschrieben und den Akkupack auf. Insbesondere ist von mindestens dem erstartigen Führungssteg zu dem aufgenommenen, insbesondere und positionierten, Akkupack ein Abstand entlang der ersten Richtung kleiner als ein Abstand entlang der zweiten Richtung. Zusätzlich oder alternativ ist von mindestens dem drittartigen Führungssteg, soweit vorhanden, zu dem aufgenommenen, insbesondere und positionierten, Akkupack ein Abstand entlang der ersten Richtung gleich einem Abstand entlang der zweiten Richtung, insbesondere bei einer niedrigen oder keiner mechanischen Last. Weiter zusätzlich oder alternativ kann der Akkupack eine Mehrzahl von Akkumulatorzellen aufweisen. Insbesondere können die Akkumulatorzellen jeweils einzelne wiederaufladbare Speicherelemente für elektrische Energie auf elektrochemischer Basis sein. Weiter zusätzlich oder alternativ können die Akkumulatorzellen Lithium-Ionen-Akkumulatorzellen sein. Weiter zusätzlich oder alternativ können die Akkumulatorzellen gleich, insbesondere typ- und/oder baugleich, sein. Weiter zusätzlich oder alternativ kann eine, insbesondere jeweilige, Zell-Spannung, insbesondere Zell-Nennspannung, einer, insbesondere jeweiligen, der Akkumulatorzellen minimal 2 V und/oder maximal 4 V, insbesondere 3,6 V, sein. Weiter zusätzlich oder alternativ können die Akkumulatorzellen Rundzellen, prismatische Zellen oder Pouchzellen sein. Weiter zusätzlich oder alternativ kann der Akkupack, insbesondere sein Gehäuse, im Wesentlichen bzw. etwa, insbesondere genau, Parallelepiped-förmig, insbesondere Quader-förmig sein. Weiter zusätzlich oder alternativ kann der Akkupack, insbesondere sein Gehäuse, eine Breite, insbesondere in der ersten Richtung, von minimal 5 cm und/oder maximal 20 cm, eine Länge, insbesondere in der zweiten Richtung, von minimal 2,5 cm und/oder maximal 10 cm und/oder eine Höhe, insbesondere in einer, insbesondere der, dritten Richtung, von minimal 7,5 cm und/oder maximal 30 cm aufweisen bzw. haben. Weiter zusätzlich oder alternativ kann der Akkupack für eine maximale elektrische Leistung von minimal 1 kW, insbesondere minimal 2 kW, und/oder maximal 10 kW, insbesondere maximal 5 kW, und/oder eine, insbesondere elektrische, Nennspannung von minimal 10 V, insbesondere minimal 20 V, und/oder maximal 100 V, insbesondere maximal 50 V, ausgebildet bzw. konfiguriert sein. Weiter zusätzlich oder alternativ kann der Akkupack einen maximalen, insbesondere elektrischen, Energieinhalt von minimal 100 Wh (Wattstunden), insbesondere minimal 200 Wh, und/oder maximal 4000 Wh, insbesondere maximal 2000 Wh, insbesondere maximal 1000 Wh, insbesondere maximal 500 Wh, aufweisen bzw. haben. Weiter zusätzlich oder alternativ kann der Akkupack eine Masse von minimal 0,5 kg (Kilogramm), insbesondere minimal 1 kg, und/oder maximal 10 kg, insbesondere maximal 5 kg, aufweisen bzw. haben.

Alternativ, insbesondere zu dem vorhergehend Genannten bzw. Beschriebenen, kann der Akkupack mindestens den erstartigen Führungssteg und mindestens den zweitartigen Führungssteg, insbesondere und mindestens den drittartigen Führungssteg, aufweisen. Das Akkugerät, insbesondere sein Akkuschacht, kann mindestens die Führungsnut und mindestens die Umfangsfläche aufweisen. Insbesondere können bei dem vorhergehend Genannten bzw. Beschriebenen die Begriffe "Akkupack" und "Akkugerät" und/oder die Begriffe "Führungssteg" und "Führungsnut", insbesondere und "Umfangsfläche", miteinander getauscht werden. In anderen Worten:

Das erfindungsgemäße System weist einen, insbesondere den, Akkupack und/oder ein, insbesondere das, Akkugerät auf.

Der Akkupack ist zur auswechselbaren Aufnahme durch einen, insbesondere den, Akkuschacht des Akkugeräts ausgebildet. Der Akkupack weist mindestens einen, insbesondere den, erstartigen Führungssteg auf mindestens einer, insbesondere der, Umfangsseite und mindestens einen, insbesondere den, von dem erstartigen Führungssteg verschiedenartigen zweitartigen Führungssteg auf mindestens derselben Umfangsseite auf. Mindestens der erstartige Führungssteg ist zur Berührung des Akkugeräts in mindestens einer, insbesondere der, Führungsnut des Akkugeräts, insbesondere des Akkuschachts, zur geführten Positionierung des Akkupacks in, insbesondere nur, einer, insbesondere der und/oder einzigen, ersten Richtung in dem Akkuschacht ausgebildet. Mindestens der zweitartige Führungssteg ist zur Berührung des Akkugeräts an mindestens einer, insbesondere der, Umfangsfläche des Akkugeräts, insbesondere des Akkuschachts, zur geführten Positionierung des Akkupacks in, insbesondere nur, einer, insbesondere der und/oder einzigen, von der ersten Richtung verschiedenen zweiten Richtung in dem Akkuschacht ausgebildet.

Zusätzlich oder alternativ weist das Akkugerät den Akkuschacht, mindestens die Führungsnut und mindestens die Umfangsfläche auf. Der Akkuschacht ist zur auswechselbaren Aufnahme des Akkupacks ausgebildet. Das Akkugerät ist zur Berührung durch mindestens den erstartigen Führungssteg des Akkupacks auf mindestens der Umfangsseite des Akkupacks in mindestens der Führungsnut zur geführten Positionierung des Akkupacks in, insbesondere nur, der, insbesondere einzigen, ersten Richtung in dem Akkuschacht ausgebildet. Das Akkugerät ist zur Berührung durch mindestens den von dem erstartigen Führungssteg verschiedenartigen zweitartigen Führungssteg des Akkupacks auf mindestens derselben Umfangsseite des Akkupacks an mindestens der Umfangsfläche zur geführten Positionierung des Akkupacks in, insbesondere nur, der, insbesondere einzigen, von der ersten Richtung verschiedenen zweiten Richtung in dem Akkuschacht ausgebildet.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: schematisch eine Seitenansicht eines erfindungsgemäßen Systems aufweisend ein erfindungsgemäßes Akkugerät und einen Akkupack,

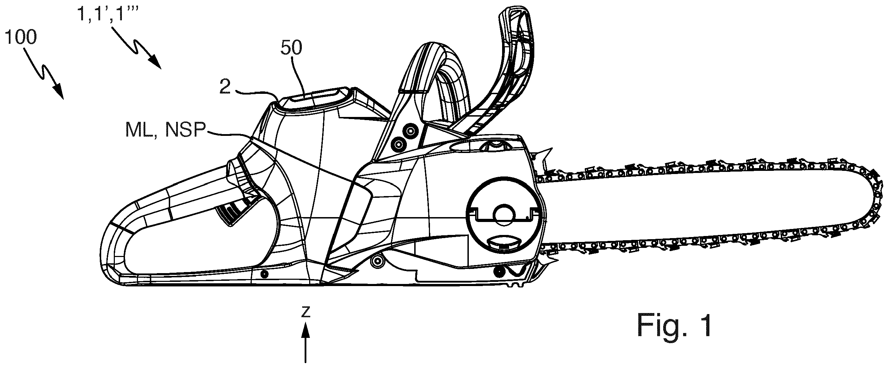

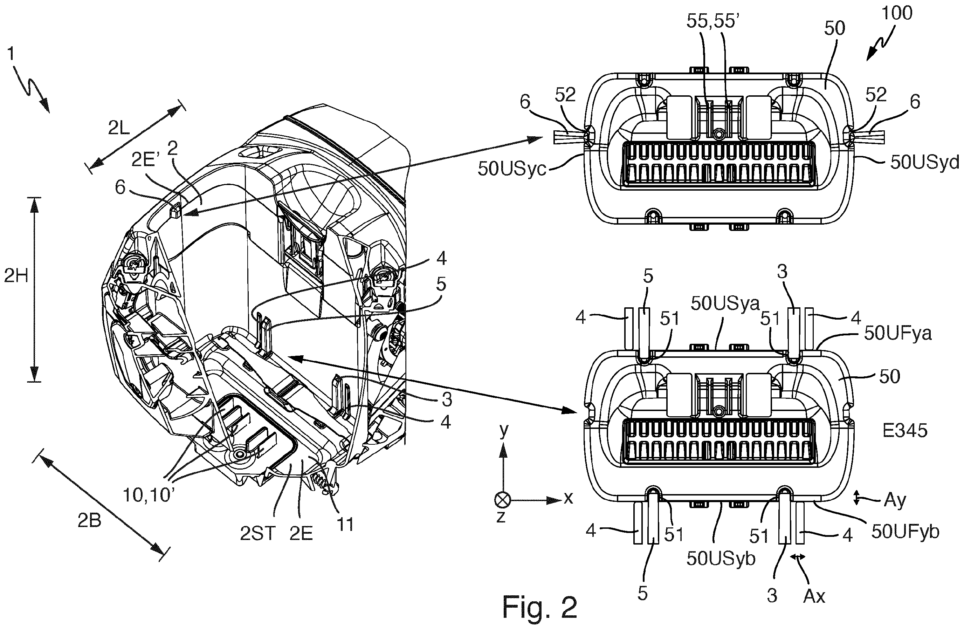

- Fig. 2: schematisch eine geschnittene Perspektivansicht eines Akkuschachts, mindestens eines erstartigen Führungsstegs, mindestens eines zweitartigen Führungsstegs, mindestens eines drittartigen Führungsstegs und mindestens eines viertartigen Führungsstegs des Akkugeräts der Fig. 1, eine Querschnittansicht mindestens des viertartigen Führungsstegs und des Akkupacks der Fig. 1 im Bereich eines Einführungsendes des Akkuschachts und eine Querschnittansicht mindestens des erstartigen Führungsstegs, mindestens des zweitartigen Führungsstegs, mindestens des drittartigen Führungsstegs und des Akkupacks der Fig. 1 im Bereich eines Aufnahmeendes des Akkuschachts,
- Fig. 3: schematisch eine Draufsicht auf den Akkuschacht der Fig. 2,
- Fig. 4: schematisch eine Ansicht auf eine Umfangsseite des Akkupacks der Fig. 1,
- Fig. 5: schematisch eine Ansicht auf eine gegenüberliegende Umfangsseite des Akkupacks der Fig. 1,
- Fig. 6: schematisch eine Ansicht auf eine abgewandte Umfangsseite des Akkupacks der Fig. 1,
- Fig. 7: schematisch eine Perspektivansicht des erfindungsgemäßen Systems aufweisend ein weiteres erfindungsgemäßes Akkugerät und den Akkupack der Fig. 1,
- Fig. 8: schematisch eine Explosionsansicht eines Akkuschachts des Akkugeräts der Fig. 7, und
- Fig. 9: schematisch eine Querschnittansicht eines weiteren erfindungsgemäßen Systems aufweisend ein nochmals weiteres erfindungsgemäßes Akkugerät und einen erfindungsgemäßen Akkupack.

### DETAILLIERTE BESCHREIBUNG DER AUSFÜHRUNGSBEISPIELE

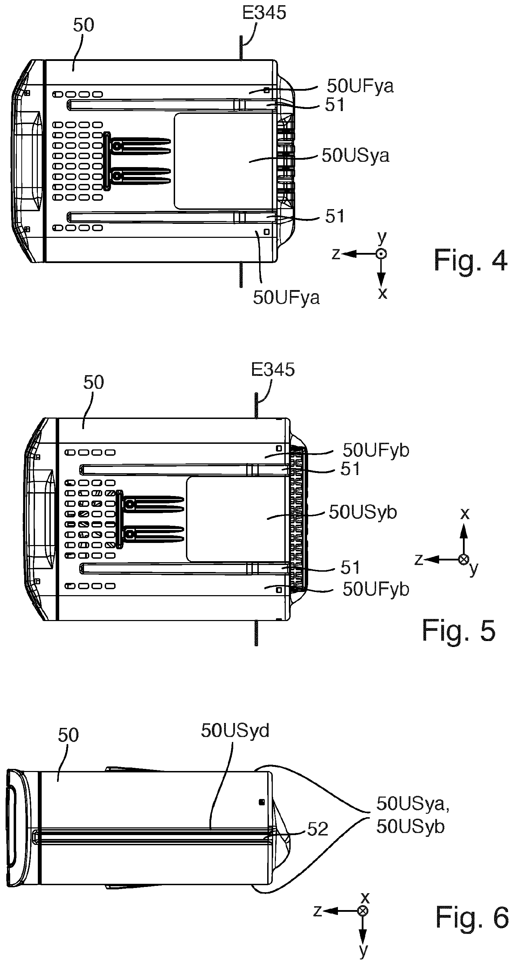

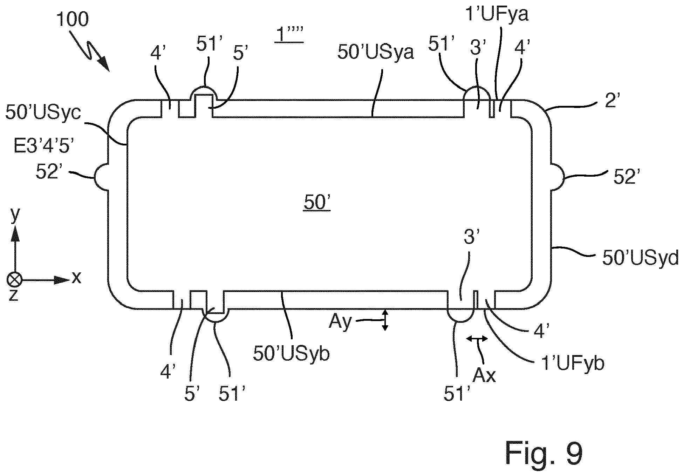

Fig. 1 bis 8 und 9 zeigen, insbesondere jeweils, ein erfindungsgemäßes System 100, 100'. Das System 100, 100' weist, insbesondere mindestens, ein erfindungsgemäßes Akkugerät 1, 1"" und einen, in Fig. 9 erfindungsgemäßen, Akkupack 50, 50' auf.

In dem in Fig. 1 bis 8 gezeigten Ausführungsbeispiel weist das Akkugerät 1, insbesondere mindestens, einen Akkuschacht 2, mindestens einen erstartigen Führungssteg 3 und mindestens einen von dem erstartigen Führungssteg 3 verschiedenartigen zweitartigen Führungssteg 4 auf. Der Akkuschacht 2 ist zur auswechselbaren Aufnahme des Akkupacks 50 ausgebildet, insbesondere nimmt auf. Mindestens der erstartige Führungssteg 3 ist zur Berührung des Akkupacks 50 in mindestens einer Führungsnut 51 des Akkupacks 50 auf mindestens einer Umfangsseite 50USya, 50USyb des Akkupacks 50 zur geführten Positionierung des Akkupacks 50 in einer ersten Richtung x in dem Akkuschacht 2 ausgebildet, insbesondere berührt und führt und positioniert somit. Mindestens der zweitartige Führungssteg 4 ist zur Berührung des Akkupacks 50 an mindestens einer Umfangsfläche 50UFya, 50UFyb des Akkupacks 50 auf mindestens derselben Umfangsseite 50USya, 50USyb des Akkupacks 50 zur geführten Positionierung des Akkupacks 50 in einer von der ersten Richtung x verschiedenen zweiten Richtung y in dem Akkuschacht 2 ausgebildet, insbesondere berührt und führt und positioniert somit.

Insbesondere ist von mindestens dem erstartigen Führungssteg 3 zu dem aufgenommenen Akkupack 50 ein Abstand Ax entlang der ersten Richtung x kleiner als ein Abstand Ay entlang der zweiten Richtung y, wie in Fig. 2 gezeigt.

In Fig. 1 bis 3 ist das Akkugerät 1 ein, insbesondere handgeführtes, insbesondere handgetragenes, Bearbeitungsgerät 1' zum elektrischen Antrieb mittels des Akkupacks 50.

In dem gezeigten Ausführungsbeispiel ist das Bearbeitungsgerät 1' eine Säge 1'", insbesondere eine Kettensäge. In alternativen Ausführungsbeispielen kann das Bearbeitungsgerät ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere oder ein Hochdruckreiniger sein.

Des Weiteren weist in dem gezeigten Ausführungsbeispiel das Bearbeitungsgerät 1' nur einen einzigen Akkuschacht 2 auf. In alternativen Ausführungsbeispielen kann das Bearbeitungsgerät mindestens zwei Akkuschächte aufweisen.

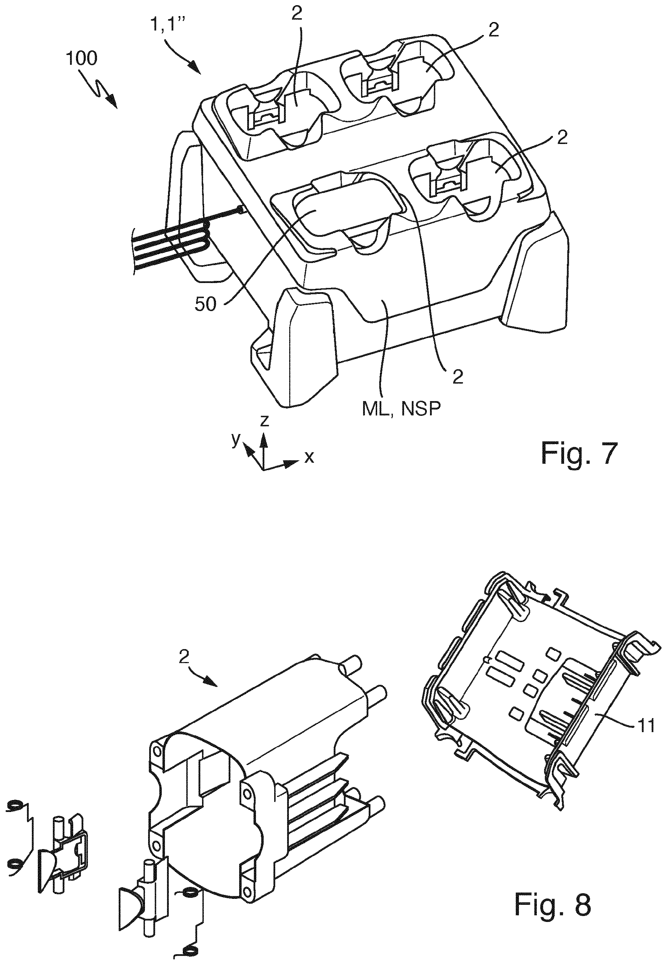

In Fig. 7 und 8 ist das Akkugerät 1 ein Ladegerät 1" zur elektrischen Aufladung des Akkupacks 50.

In dem gezeigten Ausführungsbeispiel weist das Ladegerät 1" vier Akkuschächte 2 auf. In alternativen Ausführungsbeispielen kann das Ladegerät nur einen einzigen Akkuschacht oder mindestens zwei, insbesondere mindestens drei, insbesondere mindestens fünf, Akkuschächte aufweisen.

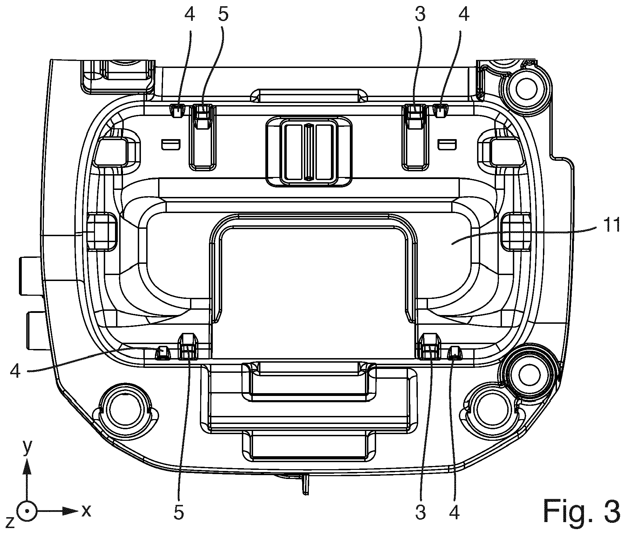

Im Detail steht mindestens der erstartige Führungssteg 3 entlang der zweiten Richtung y zu dem Akkupack 50 weiter vor als mindestens der zweitartige Führungssteg 4, wie in Fig. 2 und 3 gezeigt.

Zusätzlich oder alternativ ist mindestens der erstartige Führungssteg 3 entlang der zweiten Richtung y länger als mindestens der zweitartige Führungssteg 4.

Außerdem weist das Akkugerät 1 mindestens einen von dem erstartigen Führungssteg 3 und/oder dem zweitartigen Führungssteg 4 verschiedenartigen drittartigen Führungssteg 5 auf. Mindestens der drittartige Führungssteg 5 ist zur Erstreckung in mindestens eine der Führungsnuten 51 des Akkupacks 50 auf mindestens derselben Umfangsseite 50USya, 50USyb des Akkupacks 50, insbesondere zur Absicherung des Akkupacks 50 in der ersten Richtung x und/oder der zweiten Richtung y in dem Akkuschacht 50, ausgebildet, insbesondere erstreckt sich und sichert somit ab.

Insbesondere ist mindestens der drittartige Führungssteg 5 entlang der ersten Richtung schmaler x als mindestens der erstartige Führungssteg 3.

Zusätzlich oder alternativ ist mindestens der drittartige Führungssteg 5 entlang der zweiten Richtung y länger als mindestens der erstartige Führungssteg 3.

Weiter zusätzlich oder alternativ steht mindestens der drittartige Führungssteg 5 entlang der zweiten Richtung y zu dem Akkupack 50 weiter vor als mindestens der erstartige Führungssteg 3.

Zudem weist das Akkugerät 1, insbesondere pro Akkuschacht 2 und/oder genau, zwei erstartige Führungsstege 3 auf. Die erstartigen Führungsstege 3 sind zur Berührung des Akkupacks 50 in zwei Führungsnuten 51 des Akkupacks 50 auf gegenüberliegenden Umfangsseiten 50USya, 50USyb des Akkupacks 50 ausgebildet, insbesondere berühren.

Zusätzlich oder alternativ weist das Akkugerät 1, insbesondere pro Akkuschacht 2, mindestens zwei, insbesondere genau vier, zweitartige Führungsstege 4 auf. Die zweitartigen Führungsstege 4 sind zur Berührung des Akkupacks 50 an zwei Umfangsflächen 50UFya, 50UFyb des Akkupacks auf gegenüberliegenden Umfangsseiten 50USya, 50USyb des Akkupacks 50 ausgebildet, insbesondere berühren, und/oder an mindestens der Umfangsfläche 50UFya, 50UFyb entlang der ersten Richtung x versetzt.

Weiter zusätzlich oder alternativ weist das Akkugerät 1, insbesondere pro Akkuschacht 2 und/oder genau, zwei drittartige Führungsstege 5 auf. Die drittartigen Führungsstege 5 sind zur Erstreckung in zwei Führungsnuten 51 des Akkupacks 50 auf gegenüberliegenden Umfangsseiten 50USya, 50USyb des Akkupacks 50 ausgebildet, insbesondere erstrecken sich.

Im Detail liegen die erstartigen Führungsstege 3 und/oder die zweitartigen Führungsstege 4 und/oder die drittartigen Führungsstege 5 sich entlang der zweiten Richtung y im Wesentlichen gegenüber.

Des Weiteren sind mindestens der erstartige Führungssteg 3 und mindestens der zweitartige Führungssteg 4, insbesondere und mindestens der drittartige Führungssteg 5, entlang der ersten Richtung x versetzt.

Insbesondere sind zweitartige Führungsstege 4 und mindestens der erstartige Führungssteg 3 und/oder mindestens der drittartige Führungssteg 5 entlang der ersten Richtung dazwischen.

Außerdem ist der Akkuschacht 2 zur Aufnahme des Akkupacks 50 entlang einer dritten Richtung z ausgebildet, insbesondere nimmt auf.

Insbesondere sind mindestens der erstartige Führungssteg 3 und mindestens der zweitartige Führungssteg 4, insbesondere und mindestens der drittartige Führungssteg 5, in einer zu der dritten Richtung z orthogonalen Ebene E345.

Zusätzlich oder alternativ verlaufen/verläuft mindestens der erstartige Führungssteg 3 und/oder mindestens der zweitartige Führungssteg 4 und/oder mindestens der drittartige Führungssteg 5 im Wesentlichen parallel zu der dritten Richtung z.

Weiter zusätzlich oder alternativ ist die erste Richtung x im Wesentlichen orthogonal zu der dritten Richtung z und/oder im Wesentlichen parallel zu der Umfangsseite 50USya, 50USyb.

Weiter zusätzlich oder alternativ ist die zweite Richtung y im Wesentlichen orthogonal zu der ersten Richtung x und/oder im Wesentlichen orthogonal zu der dritten Richtung z und/oder im Wesentlichen orthogonal zu der Umfangsseite 50USya, 50USyb.

Weiter zusätzlich oder alternativ ist die dritte Richtung z im Wesentlichen parallel zu der Umfangsseite 50USya, 50USyb.

In den gezeigten Ausführungsbeispielen sind/ist die erste Richtung x und/oder die zweite Richtung y im Wesentlichen, insbesondere genau, horizontal und/oder die dritte Richtung z ist im Wesentlichen, insbesondere genau, vertikal.

Zudem sind mindestens der erstartige Führungssteg 3 und mindestens der zweitartige Führungssteg 4, insbesondere und mindestens der drittartige Führungssteg 5, mindestens, insbesondere nur, im Bereich eines, insbesondere unteren, Aufnahmeendes 2E des Akkuschachts 2.

Des Weiteren weist das Akkugerät 1 mindestens einen elektrischen Gerätekontakt 10, insbesondere Gerätesteckverbinder 10', zur elektrischen Kontaktierung von mindestens einem elektrischen Packkontakt 55, insbesondere Packsteckverbinder 55', des Akkupacks 50 auf, insbesondere kontaktiert.

Zusätzlich ist mindestens der Gerätekontakt 10, insbesondere nur, im Bereich des Aufnahmeendes 2E, insbesondere auf einer Stirnseite 2ST des Akkuschachts 2.

Weiter zusätzlich oder alternativ sind mindestens der erstartige Führungssteg 3 und mindestens der zweitartige Führungssteg 4 zu der Positionierung bei der Kontaktierung ausgebildet, insbesondere positionieren.

Außerdem sind mindestens der erstartige Führungssteg 3 und mindestens der zweitartige Führungssteg 4, insbesondere und mindestens der drittartige Führungssteg 5 und/oder der Akkuschacht 2 mindestens, insbesondere nur, teilweise, miteinander einstückig ausgebildet, insbesondere in einem Bauteil 11. An dem Bauteil 11 ist mindestens der Gerätekontakt 11 angeordnet.

Insbesondere ist mindestens der Gerätekontakt 11 beweglich gelagert, insbesondere gummigelagert, bzw. schwimmend, insbesondere an dem Bauteil 11 angeordnet. Dies ermöglicht einen Ausgleich von Toleranzen bei der Aufnahme bzw. einem Einsetzen, insbesondere der Kontaktierung, des Akkupacks 50.

Zusätzlich oder alternativ wird oder ist mindestens der Gerätekontakt 11 mit einem fertig montiertem Kabelbaum geliefert und an dem Bauteil 11 angeordnet bzw. montiert. Dies ermöglicht eine einfache bzw. leichte Montierbarkeit und/oder eine einfache bzw. leichte Servicebarkeit.

Weiter sind/ist mindestens der erstartige Führungssteg 3 und/oder mindestens der drittartige Führungssteg 5 zur Vermeidung, insbesondere Verhinderung, einer fehlausgerichteten Aufnahme des Akkupacks 50 in dem Akkuschacht 2 ausgebildet, insbesondere asymmetrisch angeordnet.

In dem in Fig. 1 bis 8 gezeigten Ausführungsbeispiel weist das Akkugerät 1 mindestens einen von dem erstartigen Führungssteg 3 und/oder dem zweitartigen Führungssteg 4 und/oder dem drittartigen Führungssteg 5 verschiedenartigen viertartigen Führungssteg 6 auf, insbesondere pro Akkuschacht 2 genau zwei viertartige Führungsstege 6. Mindestens der viertartige Führungssteg 6 ist zur Berührung des Akkupacks 50 in mindestens einer, anderen, Führungsnut 52, insbesondere genau zwei Führungsnuten 52, des Akkupacks 50 auf mindestens einer der Umfangsseite 50USya, 50USyb abgewandten Umfangsseite 50USyc, 50USyd, insbesondere gegenüberliegenden Umfangsseiten 50USyc, 50USyd, des Akkupacks 50 zur geführten Positionierung des Akkupacks 50 in der ersten Richtung x und/oder der zweiten Richtung y in dem Akkuschacht 2 ausgebildet, insbesondere berührt und führt und positioniert somit.

Insbesondere liegen die viertartigen Führungsstege 6 sich entlang der ersten Richtung x im Wesentlichen, insbesondere genau, gegenüber.

Zusätzlich oder alternativ verläuft mindestens der viertartige Führungssteg 6 im Wesentlichen, insbesondere genau, parallel zu der dritten Richtung z.

Weiter zusätzlich oder alternativ ist mindestens der viertartige Führungssteg 6, insbesondere nur, im Bereich eines, insbesondere oberen, Einführungsendes 2E' des Akkuschachts 2.

Weiter zusätzlich oder alternativ sind mindestens der viertartige Führungssteg 6 und der Akkuschacht 2, insbesondere nur, teilweise miteinander einstückig ausgebildet, insbesondere in einem, insbesondere anderen, Bauteil 11'.

In anderen Worten: Der Akkuschacht 2 ist zweistückig bzw. -teilig.

Weiter zusätzlich oder alternativ ist mindestens der viertartige Führungssteg 6 zur Vermeidung, insbesondere Verhinderung, einer fehlausgerichteten Aufnahme, insbesondere Einführung, des Akkupacks 50 in dem Akkuschacht 2 ausgebildet, insbesondere asymmetrisch angeordnet.

Weiter zusätzlich oder alternativ weisen/weist mindestens der erstartige Führungssteg 3 und/oder mindestens der zweitartige Führungssteg 4 und/oder mindestens der drittartige Führungssteg 5 und/oder mindestens der viertartige Führungssteg 6, insbesondere jeweils und/oder, insbesondere entlang der dritten Richtung z, zu dem Einführungsende 2E' des Akkuschachts 2 bzw. nach oben, eine Gleitschräge auf.

Im Übrigen gleitet der Akkupack 50, insbesondere geführt von dem Akkuschacht 2, bis er, insbesondere unten, auf mindestens den erstartigen Führungssteg 3 und mindestens den zweitartigen Führungssteg 4 stößt bzw. trifft.

Zudem erfolgt eine Arretierung bzw. Fixierung des Akkupacks 50 in dem Akkuschacht 2 über mindestens eine Stufe aufweisend eine Rampe und eine Kerbe. Durch mindestens einen Sperrhebel, insbesondere maximal zwei Sperrhebel, wird oder ist der Akkupack 50 so in dem Akkugerät 1, insbesondere dem Akkuschacht 2, gehalten.

Des Weiteren erfolgt ein Anschlag in der dritten Richtung z über eine Umfangsfläche, mit welcher der Akkupack 50 mit der Stirnseite 2ST des Akkuschachts 2 in Berührung kommt. Insbesondere ist hierbei mindestens eine Auswurf- bzw. Ausrückfeder noch nicht auf Block.

Zu beachten ist, dass der Anschlag in der dritten Richtung z des Akkupacks 50, insbesondere nur, bei einer hohen mechanischen Last erfolgt. Mindestens die Auswurffeder drückt den Akkupack 50 im Normalfall bzw. bei einer niedrigen bzw. keiner mechanischen Last in eine Normal- bzw. Betriebsposition, welche sich durch eine Verrastung mit mindestens dem Sperrhebel einstellt.

Zum Ent- bzw. Herausnehmen, insbesondere und Greifen, des Akkupacks 50 gibt es mindestens eine konkave Schale, insbesondere zwei Schalen. In mindestens diese Schale wird mindestens der Sperrhebel beim Auslösen des Akkupacks 50 gedrückt.

Außerdem ist der Akkuschacht 2 im Wesentlichen Parallelepiped-förmig, insbesondere Quader-förmig.

Zusätzlich oder alternativ weist der Akkuschacht 2 eine Breite 2B, insbesondere in der ersten Richtung x, von minimal 5 cm und/oder maximal 20 cm, eine Länge 2L, insbesondere in der zweiten Richtung y, von minimal 2,5 cm und/oder maximal 10 cm und/oder eine Höhe 2H, insbesondere in der dritten Richtung z, von minimal 7,5 cm und/oder maximal 30 cm auf.

Insbesondere sind mindestens der erstartige Führungssteg 3 und mindestens der zweitartige Führungssteg 4, insbesondere und mindestens der drittartige Führungssteg 5, auf mindestens einer Breitseite, insbesondere des Akkuschachts 2 und/oder des Akkupacks 50, insbesondere angeordnet. Zusätzlich oder alternativ ist mindestens der viertartige Führungssteg 6 auf mindestens einer Längsseite, insbesondere des Akkuschachts 2 und/oder des Akkupacks 50, insbesondere angeordnet.

Weiter zusätzlich oder alternativ ist das Akkugerät 1 für eine maximale elektrische Leistung ML von minimal 1 kW, insbesondere minimal 2 kW, und/oder maximal 10 kW, insbesondere maximal 5 kW, und/oder eine Nennspannung NSP von minimal 10 V, insbesondere minimal 20 V, und/oder maximal 100 V, insbesondere maximal 50 V, ausgebildet.

In dem in Fig. 9 gezeigten Ausführungsbeispiel ist der Akkupack 50' zur auswechselbaren Aufnahme durch einen Akkuschacht 2' des Akkugeräts 1"" ausgebildet, insbesondere ist aufgenommen. Der Akkupack 50' weist mindestens einen erstartigen Führungssteg 3' auf mindestens einer Umfangsseite 50'USya, 50'USyb und mindestens einen von dem erstartigen Führungssteg 3' verschiedenartigen zweitartigen Führungssteg 4' auf mindestens derselben Umfangsseite 50'USya, 50'USyb auf. Mindestens der erstartige Führungssteg 3' ist zur Berührung des Akkugeräts 1"" in mindestens einer Führungsnut 51' des Akkugeräts 1"" zur geführten Positionierung des Akkupacks 50' in einer ersten Richtung x in dem Akkuschacht 2 ausgebildet, insbesondere berührt und wird oder ist somit geführt und positioniert. Mindestens der zweitartige Führungssteg 4' ist zur Berührung des Akkugeräts 1"" an mindestens einer Umfangsfläche 1'UFya, 1'UFyb des Akkugeräts 1"" zur geführten Positionierung des Akkupacks 50' in einer von der ersten Richtung x verschiedenen zweiten Richtung z in dem Akkuschacht 2 ausgebildet, insbesondere berührt und wird oder ist somit geführt und positioniert.

Zusätzlich oder alternativ weist das Akkugerät 1"" den Akkuschacht 2', mindestens die Führungsnut 51' und mindestens die Umfangsfläche 1'UFya, 1'UFyb auf. Der Akkuschacht 2' ist zur auswechselbaren Aufnahme des Akkupacks 50' ausgebildet, insbesondere nimmt auf. Das Akkugerät 1"" ist zur Berührung durch mindestens den erstartigen Führungssteg 3' des Akkupacks 50' auf mindestens der Umfangsseite 50'USya, 50'USyb des Akkupacks 50' in mindestens der Führungsnut 51' zur geführten Positionierung des Akkupacks 50' in der ersten Richtung x in dem Akkuschacht 2' ausgebildet, insbesondere wird oder ist berührt und führt und positioniert somit. Das Akkugerät 1"" ist zur Berührung durch mindestens den von dem erstartigen Führungssteg 3' verschiedenartigen zweitartigen Führungssteg 4' des Akkupacks 50' auf mindestens derselben Umfangsseite 50'USya, 50'USyb des Akkupacks 50' an mindestens der Umfangsfläche 1'UFya, 1'UFyb zur geführten Positionierung des Akkupacks 50' in der von der ersten Richtung x verschiedenen zweiten Richtung y in dem Akkuschacht 2' ausgebildet, insbesondere wird oder ist berührt und führt und positioniert somit.

Im Übrigen gilt das vorhergehend für das in Fig. 1 bis 8 gezeigte Ausführungsbeispiel Genannte bzw. Beschriebene für das in Fig. 9 gezeigte Ausführungsbeispiel, insbesondere mit Tausch der Begriffe "Akkupack" und "Akkugerät" und/oder der Begriffe "Führungssteg" und "Führungsnut", insbesondere und "Umfangsfläche", miteinander.

Wie die gezeigten und oben erläuterten Ausführungsbeispiele deutlich machen, stellt die Erfindung ein vorteilhaftes Akkugerät und ein vorteilhaftes System aufweisend ein, insbesondere solches, Akkugerät und/oder einen Akkupack bereit, das jeweils verbesserte Eigenschaften aufweist bzw. hat.

## Patentansprüche

1. Akkugerät (1), wobei das Akkugerät (1) aufweist:
- einen Akkuschacht (2), wobei der Akkuschacht (2) zur auswechselbaren Aufnahme eines Akkupacks (50) ausgebildet ist,
- mindestens einen erstartigen Führungssteg (3), wobei mindestens der erstartige Führungssteg (3) zur Berührung des Akkupacks (50) in mindestens einer Führungsnut (51) des Akkupacks (50) auf mindestens einer Umfangsseite (50USya, 50USyb) des Akkupacks (50) zur geführten Positionierung des Akkupacks (50) in einer ersten Richtung (x) in dem Akkuschacht (2) ausgebildet ist, und
- mindestens einen von dem erstartigen Führungssteg (3) verschiedenartigen zweitartigen Führungssteg (4), wobei mindestens der zweitartige Führungssteg (4) zur Berührung des Akkupacks (50) an mindestens einer Umfangsfläche (50UFya, 50UFyb) des Akkupacks (50) auf mindestens derselben Umfangsseite (50USya, 50USyb) des Akkupacks (50) zur geführten Positionierung des Akkupacks (50) in einer von der ersten Richtung (x) verschiedenen zweiten Richtung (y) in dem Akkuschacht (2) ausgebildet ist.

2. Akkugerät (1) nach Anspruch 1,
- wobei mindestens der erstartige Führungssteg (3) entlang der zweiten Richtung (y) zu dem Akkupack (50) weiter vorsteht als mindestens der zweitartige Führungssteg (4), und/oder
- wobei mindestens der erstartige Führungssteg (3) entlang der zweiten Richtung (y) länger ist als mindestens der zweitartige Führungssteg (4).

3. Akkugerät (1) nach einem der vorhergehenden Ansprüche,
- wobei das Akkugerät (1) mindestens einen von dem erstartigen Führungssteg (3) und/oder dem zweitartigen Führungssteg (4) verschiedenartigen drittartigen Führungssteg (5) aufweist, wobei mindestens der drittartige Führungssteg (5) zur Erstreckung in mindestens eine der Führungsnuten (51) des Akkupacks (50) auf mindestens derselben Umfangsseite (50USya, 50USyb) des Akkupacks (50), insbesondere zur Absicherung des Akkupacks (50) in der ersten Richtung (x) und/oder der zweiten Richtung (y) in dem Akkuschacht (50), ausgebildet ist,
- insbesondere wobei mindestens der drittartige Führungssteg (5) entlang der ersten Richtung (x) schmaler ist als mindestens der erstartige Führungssteg (3), und/oder
- insbesondere wobei mindestens der drittartige Führungssteg (5) entlang der zweiten Richtung (y) länger ist als mindestens der erstartige Führungssteg (3), und/oder
- insbesondere wobei mindestens der drittartige Führungssteg (5) entlang der zweiten Richtung (y) zu dem Akkupack (50) weiter vorsteht als mindestens der erstartige Führungssteg (3).

4. Akkugerät (1) nach einem der vorhergehenden Ansprüche, insbesondere nach Anspruch 3,
- wobei das Akkugerät (1), insbesondere pro Akkuschacht (2) und/oder genau, zwei erstartige Führungsstege (3) aufweist, wobei die erstartigen Führungsstege (3) zur Berührung des Akkupacks (50) in zwei Führungsnuten (51) des Akkupacks (50) auf gegenüberliegenden Umfangsseiten (50USya, 50USyb) des Akkupacks (50) ausgebildet sind, und/oder
- wobei das Akkugerät (1), insbesondere pro Akkuschacht (2), mindestens zwei, insbesondere genau vier, zweitartige Führungsstege (4) aufweist, wobei die zweitartigen Führungsstege (4) zur Berührung des Akkupacks (50) an zwei Umfangsflächen (50UFya, 50UFyb) des Akkupacks (50) auf gegenüberliegenden Umfangsseiten (50USya, 50USyb) des Akkupacks (50) ausgebildet und/oder an mindestens der Umfangsfläche (50USya, 50USyb) entlang der ersten Richtung (x) versetzt sind, und/oder
- wobei das Akkugerät (1), insbesondere pro Akkuschacht (2) und/oder genau, zwei drittartige Führungsstege (5) aufweist, wobei die drittartigen Führungsstege (5) zur Erstreckung in zwei Führungsnuten (51) des Akkupacks (50) auf gegenüberliegenden Umfangsseiten (50USya, 50USyb) des Akkupacks (50) ausgebildet sind.

5. Akkugerät (1) nach Anspruch 4,
- wobei die erstartigen Führungsstege (3) und/oder die zweitartigen Führungsstege (4) und/oder die drittartigen Führungsstege (5) sich entlang der zweiten Richtung (y) im Wesentlichen gegenüberliegen.

6. Akkugerät (1) nach einem der vorhergehenden Ansprüche, insbesondere nach Anspruch 3,
- wobei mindestens der erstartige Führungssteg (3) und mindestens der zweitartige Führungssteg (4), insbesondere und mindestens der drittartige Führungssteg (5), entlang der ersten Richtung (x) versetzt, insbesondere zweitartige Führungsstege (4) und mindestens der erstartige Führungssteg (3) und/oder mindestens der drittartige Führungssteg (5) entlang der ersten Richtung (x) dazwischen, sind.

7. Akkugerät (1) nach einem der vorhergehenden Ansprüche, insbesondere nach Anspruch 3,
- wobei der Akkuschacht (2) zur Aufnahme des Akkupacks (50) entlang einer dritten Richtung (z) ausgebildet ist, insbesondere wobei mindestens der erstartige Führungssteg (3) und mindestens der zweitartige Führungssteg (4), insbesondere und mindestens der drittartige Führungssteg (5), in einer zu der dritten Richtung (z) orthogonalen Ebene (E345) sind, und/oder insbesondere wobei mindestens der erstartige Führungssteg (3) und/oder mindestens der zweitartige Führungssteg (4) und/oder mindestens der drittartige Führungssteg (5) im Wesentlichen parallel zu der dritten Richtung (z) verlaufen/verläuft, und/oder
- wobei die erste Richtung (x) im Wesentlichen orthogonal zu der dritten Richtung (z) und/oder im Wesentlichen parallel zu der Umfangsseite (50USya, 50USyb) ist, und/oder
- wobei die zweite Richtung (y) im Wesentlichen orthogonal zu der ersten Richtung (x) und/oder im Wesentlichen orthogonal zu der dritten Richtung (z) und/oder im Wesentlichen orthogonal zu der Umfangsseite (50USya, 50USyb) ist.

8. Akkugerät (1) nach einem der vorhergehenden Ansprüche, insbesondere nach Anspruch 3,
- wobei mindestens der erstartige Führungssteg (3) und mindestens der zweitartige Führungssteg (4), insbesondere und mindestens der drittartige Führungssteg (5), mindestens im Bereich eines Aufnahmeendes (2E) des Akkuschachts (2) sind,
- insbesondere wobei das Akkugerät (1) mindestens einen elektrischen Gerätekontakt (10), insbesondere Gerätesteckverbinder (10'), zur elektrischen Kontaktierung von mindestens einem elektrischen Packkontakt (55), insbesondere Packsteckverbinder (55'), des Akkupacks (50) aufweist, wobei mindestens der Gerätekontakt (10) im Bereich des Aufnahmeendes (2E), insbesondere auf einer Stirnseite (2ST) des Akkuschachts (2), ist.

9. Akkugerät (1) nach einem der vorhergehenden Ansprüche,
- wobei das Akkugerät (1) mindestens einen elektrischen Gerätekontakt (10), insbesondere Gerätesteckverbinder (10'), zur elektrischen Kontaktierung von mindestens einem elektrischen Packkontakt (55), insbesondere Packsteckverbinder (55'), des Akkupacks (50) aufweist,
- wobei mindestens der erstartige Führungssteg (3) und mindestens der zweitartige Führungssteg (4) zu der Positionierung bei der Kontaktierung ausgebildet sind.

10. Akkugerät (1) nach einem der vorhergehenden Ansprüche, insbesondere nach Anspruch 3 und/oder 9,
- wobei mindestens der erstartige Führungssteg (3) und mindestens der zweitartige Führungssteg (4), insbesondere und mindestens der drittartige Führungssteg (5), miteinander einstückig ausgebildet sind, insbesondere in einem Bauteil (11), wobei an dem Bauteil (11) mindestens der Gerätekontakt (10) angeordnet ist.

11. Akkugerät (1) nach einem der vorhergehenden Ansprüche, insbesondere nach Anspruch 3,
- wobei mindestens der erstartige Führungssteg (3) und/oder mindestens der drittartige Führungssteg (5) zur Vermeidung einer fehlausgerichteten Aufnahme des Akkupacks (50) in dem Akkuschacht (2) ausgebildet, insbesondere asymmetrisch angeordnet, sind/ist.

12. Akkugerät (1) nach einem der vorhergehenden Ansprüche,
- wobei der Akkuschacht (2) im Wesentlichen Parallelepiped-förmig, insbesondere Quader-förmig, ist, und/oder
- wobei der Akkuschacht (2) eine Breite (2B), insbesondere in der ersten Richtung (x), von minimal 5 cm und/oder maximal 20 cm, eine Länge (2L), insbesondere in der zweiten Richtung (y), von minimal 2,5 cm und/oder maximal 10 cm und/oder eine Höhe (2H), insbesondere in einer dritten Richtung (z), von minimal 7,5 cm und/oder maximal 30 cm aufweist, und/oder
- wobei das Akkugerät (1) für eine maximale elektrische Leistung (ML) von minimal 1 kW, insbesondere minimal 2 kW, und/oder maximal 10 kW, insbesondere maximal 5 kW, und/oder eine Nennspannung (NSP) von minimal 10 V, insbesondere minimal 20 V, und/oder maximal 100 V, insbesondere maximal 50 V, ausgebildet ist.

13. Akkugerät (1) nach einem der vorhergehenden Ansprüche,
- wobei das Akkugerät (1) ein, insbesondere handgeführtes, insbesondere handgetragenes, Bearbeitungsgerät (1') zum elektrischen Antrieb mittels des Akkupacks (50) oder ein Ladegerät (1") zur elektrischen Aufladung des Akkupacks (50) ist.

14. System (100), wobei das System (100) aufweist:
- ein Akkugerät (1) nach einem der vorhergehenden Ansprüche, und
- den Akkupack (50), insbesondere wobei von mindestens dem erstartigen Führungssteg (3) zu dem aufgenommenen Akkupack (50) ein Abstand (Ax) entlang der ersten Richtung (x) kleiner als ein Abstand (Ay) entlang der zweiten Richtung (y) ist.

15. System (100'), wobei das System (100') aufweist:
- einen Akkupack (50') und/oder ein Akkugerät (1""),
- wobei der Akkupack (50') zur auswechselbaren Aufnahme durch einen Akkuschacht (2') des Akkugeräts (1"") ausgebildet ist, und
- wobei der Akkupack (50') aufweist:
- mindestens einen erstartigen Führungssteg (3') auf mindestens einer Umfangsseite (50'USya, 50'USyb), wobei mindestens der erstartige Führungssteg (3') zur Berührung des Akkugeräts (1"") in mindestens einer Führungsnut (51') des Akkugeräts (1"") zur geführten Positionierung des Akkupacks (50') in einer ersten Richtung (x) in dem Akkuschacht (2') ausgebildet ist, und
- mindestens einen von dem erstartigen Führungssteg (3') verschiedenartigen zweitartigen Führungssteg (4') auf mindestens derselben Umfangsseite (50'USya, 50'USyb), wobei mindestens der zweitartige Führungssteg (4') zur Berührung des Akkugeräts (1"") an mindestens einer Umfangsfläche (1'UFya, 1'UFyb) des Akkugeräts (1"") zur geführten Positionierung des Akkupacks (50') in einer von der ersten Richtung (x) verschiedenen zweiten Richtung (y) in dem Akkuschacht (2) ausgebildet ist, und/oder
- wobei das Akkugerät (1"") aufweist:
- den Akkuschacht (2'), wobei der Akkuschacht (2') zur auswechselbaren Aufnahme des Akkupacks (50') ausgebildet ist,
- mindestens die Führungsnut (51'), wobei das Akkugerät (1"") zur Berührung durch mindestens den erstartigen Führungssteg (3') des Akkupacks (50') auf mindestens der Umfangsseite (50'USya, 50'USyb) des Akkupacks (50') in mindestens der Führungsnut (51') zur geführten Positionierung des Akkupacks (50') in der ersten Richtung (x) in dem Akkuschacht (2') ausgebildet ist, und
- mindestens die Umfangsfläche (1'UFya, 1'UFyb), wobei das Akkugerät (1"") zur Berührung durch mindestens den von dem erstartigen Führungssteg (3') verschiedenartigen zweitartigen Führungssteg (4') des Akkupacks (50') auf mindestens derselben Umfangsseite (50'USya, 50'USyb) des Akkupacks (50') an mindestens der Umfangsfläche (1'UFya, 1'UFyb) zur geführten Positionierung des Akkupacks (50') in der von der ersten Richtung (x) verschiedenen zweiten Richtung (y) in dem Akkuschacht (2') ausgebildet ist.
